# EUROPÄISCHE PATENTANMELDUNG

(11) **EP 2 090 174 A1**
(43) Veröffentlichungstag der Anmeldung: **19.08.2009**
(21) Anmeldenummer: 09001328.5
(22) Anmeldetag: 30.01.2009
(51) Int. Cl.: A21D 13/08, A21D 13/00, A23G 3/54, A23G 1/54

(54) **Süßware, insbesondere in Form einer Dauerbackware und Verfahren zu deren Herstellung**

(30) Priorität: 31.01.2008 DE 102008006756
(71) Anmelder: Bahlsen GmbH & Co. KG, 30163 Hannover (DE)
(72) Erfinder: Habbel, Martin, 33659 Bielefeld (DE); Grove, Karsten, 31174 Dingelbe (DE); Kurka, Norbert, 31275 Lehrte (DE)
(74) Vertreter: Weber, Joachim

(57) **Zusammenfassung**

Die Erfindung bezieht sich auf eine Süßware, welche an zumindest einer Oberfläche 1 mit zumindest einer optisch erkennbaren Struktur versehen ist, wobei zumindest ein mit der Struktur versehener Bereich mit einem Überzug 8 versehen ist, welcher eine im Wesentlichen gleiche Dicke aufweist.

## Beschreibung

Die Erfindung bezieht sich auf eine Süßware und ein Verfahren zu deren Herstellung, insbesondere auf einen Keks, welcher zum Teil schokoliert ist, sowie ein Verfahren zu dessen Herstellung.

Der Stand der Technik zeigt Dauerbackwaren oder Kekse, welche zum Teil schokoliert sind, beispielsweise Waffelröllchen. Dabei erfolgt die Schokolierung, indem ein Teil des Kekses oder der Dauerbackware getaucht oder schwallschokoliert wird. Hierbei erweist es sich nachteilig, dass die Dicke der Schokolierungsschicht (Schokoladenauflage) nicht oder nur ungenau vorbestimmbar ist und somit insbesondere Oberflächenstrukturen der Dauerbackware (des Kekses) nicht sichtbar sind.

Aus dem Stand der Technik ist es bekannt, Oberflächenstrukturen durch Druckverfahren zu erzeugen. Weiterhin sind Dekorierverfahren bekannt, bei welchen auf einen überkalteten Überzug nochmals Teil-Schichten aufgebracht werden. Auch ist es aus dem Stand der Technik bekannt, unterschiedlich dicke Überzüge vorzusehen, welche eine Oberflächenstruktur hervorrufen. Weiterhin sind dreidimensionale Gebilde bekannt, welche mit Oberflächen-Überzügen versehen sind.

Der Stand der Technik zeigt Dauerbackwaren, Kekse oder Süßwaren allgemein, welche zum Teil schokoliert sind, beispielsweise Waffelröllchen. Dabei erfolgt die Schokolierung, indem ein Teil des Produktes über verschiedene Technologiemöglichkeiten schokoliert wird. Im Einzelnen bestehen folgende Möglichkeiten:

Die Dauerback-/Süßware wird in eine Schokolade getaucht. Dabei ergibt sich folgender Nachteil:

Das Produkt bekommt keine gleichmäßige Schokoladendicke, die Oberflächenstruktur des Brandings stellt sich nicht klar heraus. Schokoladennasen/Verdickungen am unteren Ende der Schokolierfläche werden gebildet und verschlechtern die Optik. Die Schokolade läuft, bedingt durch ihre Konsistenz vom Branding, herab, was eine schlechtere Optik des Produktes mit sich bringt.

Die Dauerback-/Süßware wird mittels Schokoladenschwall übergossen. Daher ergibt sich folgender Nachteil:

Die Dicke der Schokolierungsschicht ist nicht oder nur ungenau vorbestimmbar, die Oberflächenstrukturen des Produktes werden nicht genau herausgeprägt, das Branding bleibt durch zu hohen Schokoladenanteil nicht sichtbar oder schimmert durch eine unzureichende Schokoladenmenge durch die Schokolade hindurch.

Der Erfindung liegt die Aufgabe zugrunde, eine Süßware sowie ein Verfahren zu deren Herstellung zu schaffen, welche bei einfachem Aufbau und einfacher, betriebssicherer Anwendbarkeit eine gezielte Aufbringung eines Überzugs, insbesondere einer Schokolierung ermöglicht, welche auch hohen optischen Anforderungen gerecht werden.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindung.

Erfindungsgemäß sind somit eine Süßware sowie ein Verfahren zu deren Herstellung geschaffen, welche mit einem Überzug, insbesondere einer Schokolierung, versehen werden kann. Dabei ist erfindungsgemäß vorgesehen, dass die Süßware, welche beispielsweise eine Backware, eine Dauerbackware, ein Keks oder auch eine Waffel, ein Marzipanelement oder Ähnliches, sein kann, mit einer Oberflächenstruktur versehen ist, welche durch den Überzug (die Schokolierung) deutlich sichtbar bleibt. Bei den aus dem Stand der Technik bekannten Produkten bzw. Herstellungsverfahren erfolgt die Aufbringung des Überzugs stets so, dass dieser Oberflächenstrukturen ausfüllt, so dass auf den erhabenen Bereichen oder Scheitelbereichen des Überzugs dieser sehr dünn ist, wobei die Masse des Überzugs in die benachbarten Täler wandert. Im Gegensatz hierzu ist erfindungsgemäß durch die im Wesentlichen gleich bleibende Dicke des Überzugs die Möglichkeit geschaffen, Strukturen einfach und kostengünstig auf der Süßware auszubilden und diese trotz des Überzugs deutlich sichtbar zu machen.

Besonders bevorzugt ist es erfindungsgemäß, wenn die Struktur einen Schriftzug, ein Ornament, eine Marke oder ein Branding darstellt.

Der Überzug ist erfindungsgemäß bevorzugterweise mit einer im Wesentlichen gleichen Dicke ausgebildet, die Strukturen können eine Höhe von 0,5 bis 5 mm, bevorzugt eine Höhe von 1 bis 3 mm aufweisen.

Der Überzug kann erfindungsgemäß aus Schokolade, aus einer Fettglasur oder einem zuckerhaltigen System/einer Zuckerglasur ausgebildet sein. Es ergeben sich im Rahmen der Erfindung somit vielfältige Ausgestaltungsvarianten.

Die Süßware ist bevorzugterweise flach ausgestaltet und weist in bevorzugter Ausbildung eine Griffkante oder einen nicht mit dem Überzug versehenen Endbereich auf, so dass die Süßware zum Verzehr gut gehalten werden kann. Die Größe der Süßware ist dabei bevorzugterweise so bemessen, dass diese in zwei oder mehreren Bissen verzehrt werden kann. Dabei ist die Süßware in sich stabil, um durch Abbeißen essbar zu sein. Beispielsweise ist die Süßware als Dauerbackware ausgebildet (keksartig) und in Form eines Streifens, der beispielsweise 100 mm lang, 10 bis 25 mm breit und 8 mm hoch sein kann.

Die Erfindung ist auf alle Arten von Süßwaren anwendbar, die formbar und aushärtbar sind, und die somit einen Lebensmittel-Grundkörper bilden, der formstabil ist.

Die Aufbringung des Überzugs erfolgt erfindungsgemäß so, dass dieser mit einer Konsistenz aufgebracht wird, welche ein geringes Fließen oder Verformen, beispielsweise durch Schwerkrafteinfluss ermöglicht, so dass sich der Überzug mit gleich bleibender Dicke auf die strukturierte Oberfläche des Grundkörpers auflegt.

Erfindungsgemäß ist somit auch vorgesehen, dass die Schokolierung in zwei Schokolierungsarbeitsgängen erfolgt, nämlich in einem ersten Schokolierungsarbeitsgang, in welchem eine Oberseite der Dauerbackware schokoliert wird und in einem zweiten Schokolierungsarbeitsgang, in welchem eine Unterseite schokoliert wird. Erfindungsgemäß werden für die beiden Schokolierungsarbeitsgänge unterschiedliche Verfahren gewählt. Während die Schokolierung der Unterseite nicht primär eine exakt gleich bleibende Schokoladenschicht erfordert, wird für die Schokolierung der Oberseite ein Verfahren angewandt, bei welchem definiert eine im Wesentlichen gleiche oder gleich dicke Schicht von Schokolade aufgebracht wird.

Der wesentliche Vorteil des erfindungsgemäßen Verfahrens besteht darin, dass durch die Schokolierung der Oberseite mit einer im Wesentlichen gleich bleibenden Schokoladenschicht ein sehr dünner Schokoladenüberzug aufgebracht werden kann, welcher die Oberflächenstruktur der Dauerbackware deutlich erkennen lässt.

So ist es insbesondere möglich, auf der Dauerbackware geometrische Muster, beispielsweise einen Rahmen, welcher eine Schrift begrenzt, auszubacken und nachfolgend so mit einer dünnen Schokoladenschicht zu überziehen, dass ein dreidimensionaler Gesamteindruck erhalten bleibt, welcher die Oberflächenstruktur, beispielsweise die Schrift, klar erkennen lässt. Bei Betrachtung wirkt die Oberfläche der fertigen Dauerbackware so, als ob die Oberflächenstrukturierung, beispielsweise die Schrift, nur aus Schokolade besteht, welche dreidimensional strukturiert ist.

Durch das erfindungsgemäße Herstellungsverfahren ist es somit möglich, eine Dauerbackware entweder ganz oder nur an einem Teil so mit einem Schokoladenüberzug zu versehen, dass höchste optische Anforderungen und eine höchste Oberflächenqualität erzielbar sind.

In einer besonders günstigen Ausgestaltung des erfindungsgemäßen Verfahrens ist vorgesehen, dass die Schokolierung der Oberseite mittels eines Streifenauflegers erfolgt, bevorzugterweise mittels einer Trommel. Hierdurch ist es möglich, eine definierte, exakt hinsichtlich ihrer Dicke bemessene Schokolierungsschicht aufzubringen, welche auch sehr dünn eingestellt werden kann, um Oberflächenstrukturen erkennbar wiederzugeben.

Die Schokolierung der Unterseite erfolgt erfindungsgemäß bevorzugterweise mittels einer Bodentunke, wobei die Gebäcke/Dauerbackwaren/Kekse bevorzugterweise auf Einzelgitterbänder aufgelegt sind und mittels eines Bodenwalls von unten schokoliert werden.

Erfindungsgemäß ist es möglich, die beiden Schokolierungsarbeitsgänge entweder versetzt durchzuführen, nämlich zunächst beispielsweise die Oberseite und dann die Unterseite zu schokolieren oder die beiden Schokolierungsarbeitsgänge zu kombinieren und damit im Wesentlichen gleichzeitig durchzuführen.

Die Dauerbackware/Gebäck/Keks wird erfindungsgemäß bevorzugt flach liegend schokoliert.

Besonders günstig ist es bei dem erfindungsgemäßen Verfahren, dass es möglich ist, eine Griffkante oder einen Teilbereich der Dauerbackware nicht zu schokolieren, sodass der Verzehr optimiert wird.

Bei dem erfindungsgemäßen Verfahren ist es besonders günstig, wenn die Dauerbackware in Form eines Kekses ausgebildet ist, welcher bevorzugterweise an seiner Oberfläche mit einer Struktur, beispielsweise einer Schrift oder graphischen Elementen versehen ist.

Erfindungsgemäß ist es somit möglich, zum Schokolieren den Schokoladenstreifen mit stark vorkristallisierter Schokolade aufzulegen, beispielsweise mit einer gekühlten Walze aufzubringen. Durch die vorkristallisierte Schokolade wird eine Schokoladenkonsistenz eingestellt, welche ein Ablaufen der Schokolade von den Buchstaben und den Seitenflächen des Produkts verhindert. Hierdurch ergibt sich eine gleichmäßige Dicke der Überzugsschicht (Schokoladenschicht), welche dünn aufgebracht werden kann. Dies wiederum führt zu der bereits beschriebenen, hervorragenden Sichtbarkeit der Strukturierung der Oberfläche des Produktes.

Durch eine geeignete Ausrichtung der Grundkörper (Kekse, Gebäcke) quer zur Laufrichtung ist eine nicht mit dem Überzug versehene Griffkante besonders einfach auszubilden.

Im Folgenden wird die Erfindung anhand eines Ausführungsbeispiels in Verbindung mit der Zeichnung beschrieben. Dabei zeigt:
- Fig. 1: eine perspektivische Ansicht einer erfindungsgemäßen, teilweise schokolierten Dauerbackware,
- Fig. 2: eine vereinfachte Wiedergabe einer ersten Ausgestaltung des erfin- dungsgemäßen Verfahrens in Form eines Flussdiagramms,
- Fig. 3: eine weitere Ausgestaltung des erfindungsgemäßen Verfahrens, eben- falls in Form eines Flussdiagramms, und
- Fig. 4: eine Draufsicht einer Anlage zur Schokolierung der Dauerbackware.

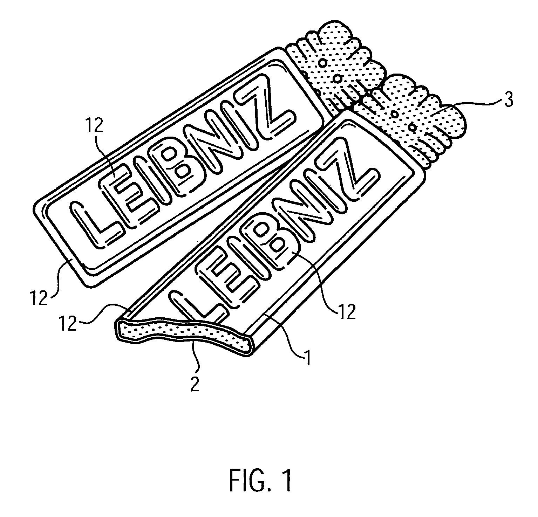

Die in Fig. 1 dargestellte Süßware (Dauerbackware) ist in Form eines Kekses ausgebildet und weist an einer Oberseite 1 und an einer Unterseite 2 jeweils eine Schokolierung auf, wobei eine Griffkante 3 nicht mit Schokolade überzogen ist. Wie die Fig. 1 zeigt, ist an der Oberfläche der Dauerbackware eine von einem Rahmen umgebene Schrift ausgebildet, welche im fertigen Zustand der Dauerbackware, welcher in Fig. 1 gezeigt ist, deutlich sichtbar ist.

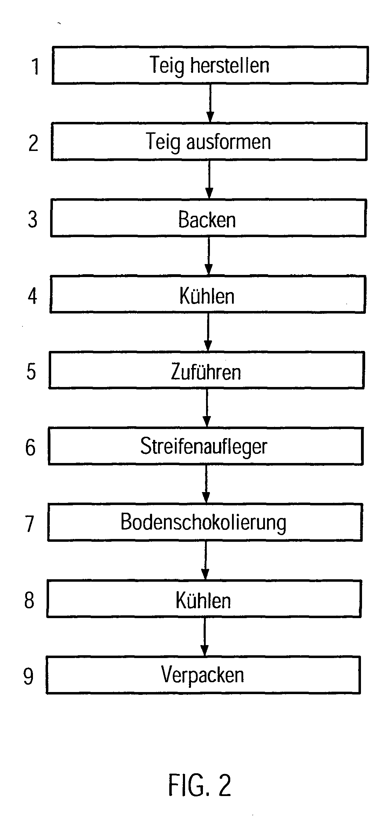

Die Fig. 2 zeigt ein Ablaufschema zur Herstellung der erfindungsgemäßen Dauerbackware. Dabei wird in Schritt 1 ein Teig hergestellt, beispielsweise mittels eines Kneters.

In einem nächsten Schritt Nr. 2 erfolgt einer Teigausformung mittels einer Formermaschine.

In einem nächsten Schritt Nr. 3 gemäß Fig. 2 erfolgt das Backen in einem Ofen. Somit werden Halbfabrikate separat gebacken, welche in Form von Keksen ohne Schokoladeüberzug ausgebildet sind und nachfolgend schokoliert werden. Im Schritt Nr. 4 gemäß Fig. 2 erfolgt die Kühlung der Halbfabrikate.

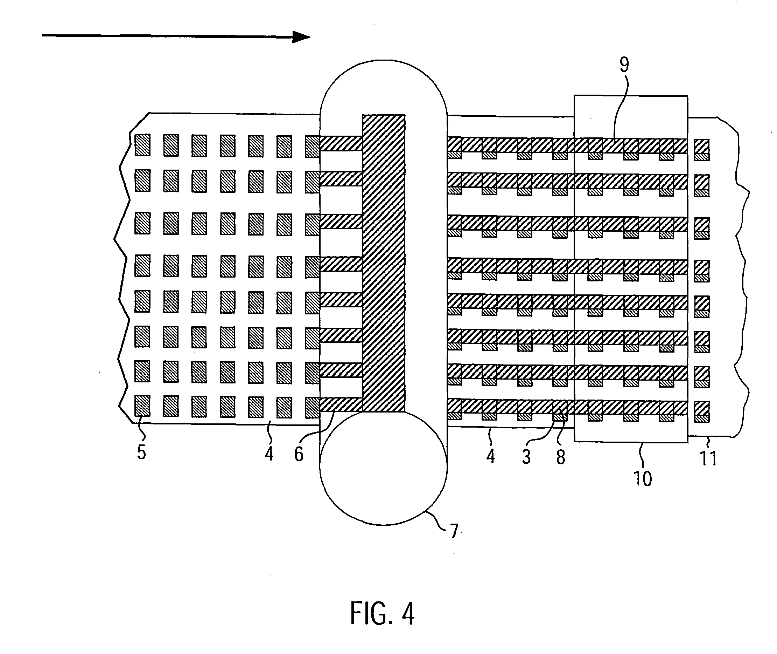

In einem Arbeitsschritt Nr. 5 gemäß Fig. 2 werden die Kekse zugeführt. Mittels eines seitlichen Schiebers werden die Gebäcke/Kekse auf einem Transporttuch 4 zentriert. Die Fig. 4 zeigt mit dem Bezugszeichen 5 unschokolierte Kekse (Halbfabrikate).

In dem Arbeitsschritt Nr. 6 gemäß Fig. 2 erfolgt eine Aufbringung von Schokolade auf die Oberseite 1. Dabei werden Schokoladenstreifen 6 (Fig. 4) mittels des Streifenauflegers (Trommelaufleger) mit einer definierten Dicke, welche relativ dünn ist, aufgebracht. Da die Kekse 5, bezogen auf die mit dem Pfeil in Fig. 4 gezeigte Laufrichtung quer angeordnet sind, verbleibt eine nicht schokolierte Griffkante 3 (griffartiger Bereich), da der Schokoladenstreifen 6 schmäler ist, als die Gesamtlänge des Kekses 5 (siehe Fig. 4). Es erfolgt somit lediglich eine Schokolierung der Sollfläche.

Durch das Aufbringen der Schokolade über eine Trommel kann immer mit einer gleichbleibenden Schokoladendicke schokoliert werden. Hierdurch bleibt die Oberflächenstruktur 12 (Schriftzug) unter der Schokolade deutlich erkennbar. Dies ist bei einem Übergießen einer Dauerbackware mit Schokolade so wie dies aus dem Stand der Technik bekannt ist, nicht möglich.

In einem nächsten Arbeitsschritt werden die an der Oberfläche 1 schokolierten Kekse weiterbefördert, wobei die Schokolierfläche 8 nach oben weist.

In einem Arbeitsschritt Nr. 7 (Fig. 2) erfolgt eine Bodenschokolierung (Bodentunke). Hierzu wird der an der Oberseite 1 teilweise schokolierte Keks auf Gitterbändern 9 (Einzelgitterbänder) überführt, die jeweils schmaler sind, als die Dauerbackware lang ist. Es erfolgt eine Überführung der Dauerbackwaren zu einer Bodentunke 10, in welcher mittels eines Bodenwalls die Unterseite 2 schokoliert wird. Die Griffkante 3 ragt dabei über das Gitterband 9 hinaus und wird nicht schokoliert.

In einem Arbeitsschritt Nr. 8 (Fig. 2) erfolgt ein Kühlen der Fertigware mittels eines Kühlkanals (Kühlband 11).

Im Schritt Nr. 9 (Fig. 2) wird die Fertigware verpackt, wobei eine vorgegebene Anzahl von fertig schokolierten Dauerbackwaren zusammen geführt und in eine Verpackung übergeben werden, beispielsweise eine Faltschachtel.

Durch die erfindungsgemäß vorgesehenen getrennten Schokolierungsschächte ist es möglich, die Oberseite 1 gezielt mit einem Schokoladenüberzug zu versehen. Dabei ermöglicht die sich drehende Trommel, von welcher die Schokolade abgewalzt wird eine gezielte Einstellung sowohl der Dicke der Schokoladenauflage als auch der Konsistenz der Schokolade. Durch gezielte Temperaturführung ist es möglich, den Kristallisationsgrad der Schokolade exakt einzustellen. Schlitze in einem Zuführtrichter, welcher sich oberhalb der Trommel des Streifenauflegers 7 befindet, ermöglicht eine exakte Dosierung nicht nur der Dicke der Schokoladenauflage sondern auch der Breite, so dass der Teilbereich der Dauerbackware, welcher an seiner Oberseite 1 schokoliert wird exakt einstellbar ist.

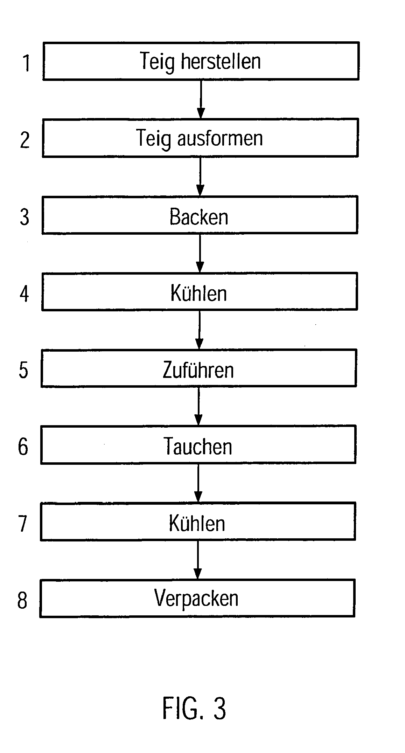

Die Fig. 3 zeigt eine Ausgestaltungsvariante, bei welcher die Aufbringung des Überzugs durch Tauchen des Grundkörpers in eine flüssige Überzugsmasse, beispielsweise teilkristallierte Schokolade, erfolgt. Alternativ hierzu ist es auch möglich, den Überzug folienartig oder plattenartig vorzufertigen, auf den Grundkörper aufzulegen und durch Erwärmung zu plastifizieren, so dass sich dieser über die Oberflächenstruktur legt.

Im Folgenden wird die Erfindung zusammenfassend nochmals präzisiert:

Die Erfindung betrifft eine
Süßware, welche an zumindest einer Oberfläche (1) mit zumindest einer optisch erkennbaren Struktur versehen ist, wobei zumindest ein mit der Struktur versehener Bereich mit einem Überzug (8) versehen ist, welcher eine im Wesentlichen gleiche Dicke aufweist;
wobei diese bevorzugt eine Backware ist,
wobei diese bevorzugt eine Dauerbackware ist,
wobei diese bevorzugt einen im Wesentlichen flachen Grundkörper umfasst,
wobei die Struktur bevorzugt rippenartige Bereiche umfasst,
wobei die Struktur bevorzugt Ornamentbereiche umfasst,
wobei die Struktur bevorzugt Schriftzeichen umfasst,
wobei die Struktur bevorzugt eine Höhe von 0,5 bis 5 mm aufweist,
wobei die Struktur bevorzugt eine Höhe von 1 bis 3 mm aufweist,
wobei der Überzug (8) bevorzugt aus einem Schokoladenmaterial besteht,
wobei der Überzug (8) bevorzugt aus einer Fettglasur besteht,
wobei der Überzug (8) bevorzugt eine zuckerhaltige Zusammensetzung umfasst,
wobei der Überzug (8) bevorzugt einseitig auf der Süßware aufgebracht ist,
wobei der Überzug (8) bevorzugt allseitig auf der Süßware aufgebracht ist,
wobei der Grundkörper bevorzugt mit einem griffartigen Bereich (3) versehen ist, welcher nicht mit dem Überzug (8) versehen ist,
wobei diese bevorzugt keksartig ausgebildet ist,
wobei diese bevorzugt mit strukturierten Rändern versehen ist,
wobei diese bevorzugt eine Größe aufweist, welche in zwei oder mehreren Bissen verzehrbar ist,
wobei diese bevorzugt streifenförmig mit dem griffartigen Bereich (3) an einem Ende ausgebildet ist.

Die Erfindung betrifft weiterhin
ein Verfahren zur Herstellung einer Süßware, wobei an zumindest einer Oberfläche eine optisch erkennbare Struktur ausgebildet ist, wobei zumindest ein mit der Struktur versehener Bereich mit einem Überzug (8) versehen wird, welcher eine im Wesentlichen gleiche Dicke aufweist,
wobei die Struktur bevorzugt mit zumindest einem rippenartigen Bereich ausgebildet ist,
wobei die Struktur bevorzugt mit Ornamentbereichen versehen wird,
wobei die Struktur bevorzugt mit Schriftzeichen versehen wird,
wobei die Struktur bevorzugt in einer Höhe von 0,5 bis 5 mm ausgebildet wird,
wobei die Struktur bevorzugt mit einer Höhe von 1 bis 3 mm ausgebildet wird,
wobei der Überzug (8) bevorzugt mittels eines Tauchverfahrens aufgebracht wird,
wobei der Überzug (8) bevorzugt mittels eines Streifenauflegers (7) aufgebracht wird,
wobei der Überzug (8) bevorzugt mittels einer Trommel aufgebracht wird,
wobei bevorzugt die Aufbringung des Überzugs (8) der Unterseite (2) mittels einer Bodentunke (20) erfolgt,
wobei bevorzugt zuerst die Aufbringung des Überzugs (8) der Oberfläche (1) und dann die Aufbringung des Überzugs (8) der Unterseite (2) erfolgen,
wobei bevorzugt die Aufbringung des Überzugs (8) der Oberfläche (1) und die Aufbringung des Überzugs (8) der Unterseite (2) im Wesentlichen gleichzeitig erfolgen,
wobei bevorzugt die Süßware flach liegend schokoliert wird,
wobei bevorzugt ein griffartiger Bereich (3) der Süßware nicht schokoliert wird,
wobei bevorzugt die Süßware in Form eines Kekses ausgebildet wird,
wobei bevorzugt der Überzug (8) als Schokolierung ausgebildet wird.

### Bezugszeichenliste

- 1: Oberseite/Oberfläche
- 2: Unterseite
- 3: Griffkante/griffartiger Bereich
- 4: Transporttuch
- 5: unschokolierter Keks
- 6: Schokoladenstreifen
- 7: Streifenaufleger
- 8: Schokolierfläche/Überzug
- 9: Gitterband
- 10: Bodentunke
- 11: Kühlband
- 12: Struktur (Schriftzug, Rahmen)

## Patentansprüche

1. Süßware, welche an zumindest einer Oberfläche (1) mit zumindest einer optisch erkennbaren Struktur versehen ist, wobei zumindest ein mit der Struktur versehener Bereich mit einem Überzug (8) versehen ist, welcher eine im Wesentlichen gleiche Dicke aufweist.

2. Süßware nach Anspruch 1, **dadurch gekennzeichnet, dass** diese eine Backware ist.

3. Süßware nach Anspruch 1, **dadurch gekennzeichnet, dass** diese eine Dauerbackware ist.

4. Süßware nach einem der Ansprüche 1 bis 3, **dadurch gekennzeichnet, dass** diese einen im Wesentlichen flachen Grundkörper umfasst.

5. Süßware nach einem der Ansprüche 1 bis 4, **dadurch gekennzeichnet, dass** die Struktur rippenartige Bereiche umfasst.

6. Süßware nach Anspruch 5, **dadurch gekennzeichnet, dass** die Struktur Ornamentbereiche und/oder Schriftzeichen umfasst.

7. Süßware nach einem der Ansprüche 1 bis 6, **dadurch gekennzeichnet, dass** der Grundkörper mit einem griffartigen Bereich (3) versehen ist, welcher nicht mit dem Überzug (8) versehen ist.

8. Süßware nach einem der Ansprüche 1 bis 7, **dadurch gekennzeichnet, dass** diese streifenförmig mit dem griffartigen Bereich (3) an einem Ende ausgebildet ist.

9. Verfahren zur Herstellung einer Süßware, wobei an zumindest einer Oberfläche eine optisch erkennbare Struktur ausgebildet ist, wobei zumindest ein mit der Struktur versehener Bereich mit einem Überzug (8) versehen wird, welcher eine im Wesentlichen gleiche Dicke aufweist.

10. Verfahren nach Anspruch 9, **dadurch gekennzeichnet, dass** die Struktur mit Ornamentbereichen und/oder Schriftzeichen versehen wird.

11. Verfahren nach einem der Ansprüche 9 oder 10, **dadurch gekennzeichnet, dass** der Überzug (8) mittels eines Tauchverfahrens aufgebracht wird.

12. Verfahren nach einem der Ansprüche 9 bis 11, **dadurch gekennzeichnet, dass** der Überzug (8) mittels eines Streifenauflegers (7) aufgebracht wird.

13. Verfahren nach einem der Ansprüche 9 bis 12, **dadurch gekennzeichnet, dass** der Überzug (8) mittels einer Trommel aufgebracht wird.

14. Verfahren nach einem der Ansprüche 9 bis 13, **dadurch gekennzeichnet, dass** die Aufbringung des Überzugs (8) der Unterseite (2) mittels einer Bodentunke (20) erfolgt.

15. Verfahren nach einem der Ansprüche 9 bis 14, **dadurch gekennzeichnet, dass** der Überzug (8) als Schokolierung ausgebildet wird.
